# EUROPEAN PATENT SPECIFICATION

(11) **EP 3 240 252 B1**
(45) Date of publication and mention of the grant of the patent: **03.10.2018**
(21) Application number: 14909486.4
(22) Date of filing: 31.12.2014
(51) Int. Cl.: H04L 27/26, H04B 3/02, H04L 5/00

(54) **SUBCARRIER INFORMATION INDICATION METHOD, APPARATUS AND SYSTEM**
SUBTRÄGERINFORMATIONSANZEIGEVERFAHREN, -VORRICHTUNG UND -SYSTEM
PROCÉDÉ, APPAREIL ET SYSTÈME D'INDICATION D'INFORMATIONS DE SOUS-PORTEUSES

(43) Date of publication of application: 01.11.2017
(60) Divisional application: 18186802.7
(73) Proprietor: Huawei Technologies Co., Ltd., Longgang District Shenzhen, Guangdong 518129 (CN)
(72) Inventor: YIN, Hui, Shenzhen Guangdong 518129 (CN); YI, Xilin, Shenzhen Guangdong 518129 (CN); FU, Rao, Shenzhen Guangdong 518129 (CN)
(74) Representative: Thun, Clemens
(86) International application number: PCT/CN2014/095883
(87) International publication number: WO 2016/106677

(56) References cited:
- EP-A1- 1 863 249
- CN-A- 101 321 145
- US-A- 6 134 273
- US-A1- 2013 287 068
- US-A1- 2013 287 068
- US-B1- 6 829 307

## Description

### TECHNICAL FIELD

The present invention relates to the data communications field, and, specifically, to a subcarrier information indicating method, an apparatus, and a system.

### BACKGROUND

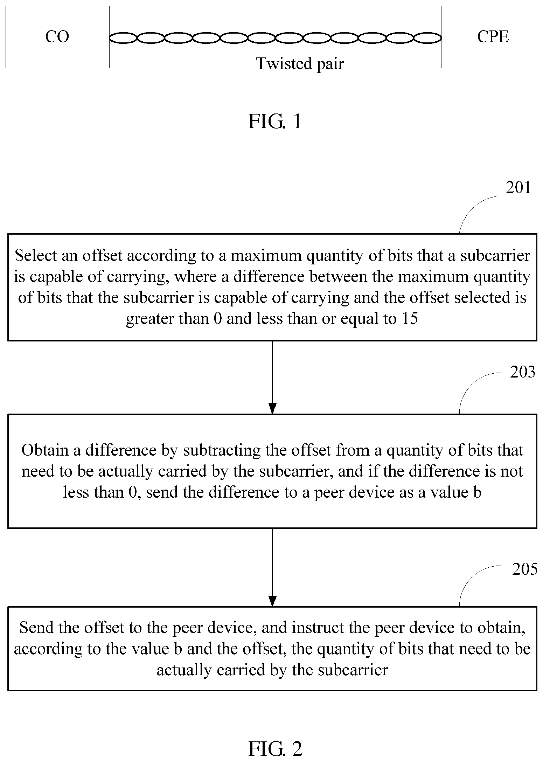

A digital subscriber line (Digital Subscriber Line, DSL for short) is a high-speed data transmission technology that implements transmission on a telephone twisted pair, such as an unshielded twisted pair (Unshielded Twisted Pair, UTP for short). Each twisted pair is connected to a customer premises equipment (Customer Premises Equipment, CPE for short) at a remote end, and the other end of the twisted pair is connected to a network side, which is known as a central office (Central Office, CO for short), as shown in FIG. 1. The CO equipment is a network-side device, such as a vectoring control entity (Vectoring Control Entity, VCE for short), a switch, or a cabinet, or may further include a distributed point unit (Distributed Point Unit, DPU for short).

The DSL technology uses frequency division multiplexing (Frequency Division Multiplexing, FDM for short) to create multiple channels in a telephone twisted pair, each channel corresponding to one subcarrier (tone). Before activation of a line, a table b needs to be exchanged between the CO and the CPE, and the table needs to include a quantity of bits carried by each subcarrier. Previously, each subcarrier carries information of a maximum of 15 bits (bit), and a value occupying four bits is used in a standard, that is, a value between 0000 and 1111 (0 to 15) is used to indicate the quantity of bits carried by each subcarrier. The value may be referred to as a value b. For detailed content of the table b, reference may be further made to the ITU-T G.993.2 standard, and details are not further described herein.

For example, EP 1 863 249 A1 refers to a method of xDSL upstream and downstream shared frequency dynamic frequency spectrum management comprising the following steps: Step a. Generate all feasible combinations of subchannels in both upstream and downstream directions for an xDSL line; Step b, Determine which combination of said combinations has an optimal spectrum coordination; and Step c) Adjust direction of transmission and transmit power of the xDSL line according to said optimal combination.

Further, US 2013/0287068A1 refers to a method of controlling a system. The method includes determining a constant number of bits for each of a plurality of tones, each constant number of bits being constant, obtaining a single parameter from a user of the system, the single parameter being a code rate and transmitting, to the user, data as information bits in the plurality of tones across a channel based on the single parameter, each of the plurality of tones including the constant number of bits.

Further, US 6,829,307B1 refers to methods and devices for adaptively changing a parameter (such as sub-carrier bit allocation and/or gain) in a multi-carrier communication signal. In a method aspect, a unit that determines a need for a change sends an express change request to a second unit. The change request identifies one or more specific sub-carrier carrier to be altered and a desired value for the parameter to be changed for each identified sub-carrier. The requesting unit then monitors the communication signal it receives to determine whether the requested change has been implemented. The determination of whether the requested change has been implemented is based at least in part upon an analysis of a portion of the received communication signal that was intended to be changed.

However, with a growing processing rate of an analog device and a digital device, each subcarrier is capable of carrying more bits (for example, 18 bits), and a value greater than 16 cannot be represented by only four binary bits. If a quantity of bits representing a value b of a subcarrier in a message exchanged between the CO and the CPE is directly changed, it is incompatible with an existing mode that uses only four bits to represent the quantity of bits carried by the subcarrier, and this will directly lead to a line activation failure.

### SUMMARY

Embodiments of the present invention provide a subcarrier information indicating method, an apparatus, and a system, to implement a manner of sending more bits by a subcarrier.

According to a first aspect, an embodiment of the present invention provides a subcarrier information indicating method, where the method includes:
selecting an offset according to a maximum quantity of bits that a subcarrier is capable of carrying, where a difference between the maximum quantity of bits that the subcarrier is capable of carrying and the selected offset is greater than 0 and less than or equal to 15;
obtaining a difference obtained by subtracting the offset from a quantity of bits that need to be actually carried by the subcarrier, and if the difference is not less than 0, sending in a message the difference to a peer device as a value b being represented by four bits; and
sending the offset to the peer device, and instructing the peer device to obtain, according to the value b and the offset, the quantity of bits that need to be actually carried by the subcarrier.

In a first possible implementation of the first aspect, the selecting an offset includes: selecting, within a value range less than or equal to the maximum quantity of bits that the subcarrier is capable of carrying, a value as the offset, or obtaining the offset according to a preset mapping table between a maximum quantity of bits that each subcarrier is capable of carrying and an offset.

In a second possible implementation of the first aspect, the subcarrier is a smallest unit carrier for transmitting information on a link connecting to the peer device.

In a third possible implementation of the first aspect, the sending the offset to the peer device includes: grouping all subcarriers in a transmission direction according to the maximum quantity of bits that the subcarrier is capable of carrying, so as to ensure that subcarriers in each group can use a same offset; and sending group information obtained by grouping all the subcarriers and the offset of each group to the peer device. According to a second aspect, an embodiment of the present invention provides a subcarrier information processing method, where the method includes:
receiving an offset sent by a peer device;
receiving a message including a value b and sent by the peer device, where the value b is a value represented by four bits and indicates a quantity of bits that need to be carried by a subcarrier; and
when it is identified that the value b in the message is not 0, using a sum of the value b and the offset as a quantity of bits that need to be actually carried by the subcarrier, and when it is identified that the value b is 0, using the value b as the quantity of bits that need to be actually carried by the subcarrier.

In a first possible implementation of the second aspect, the method further includes: determining whether the obtained quantity of bits that need to be actually carried by the subcarrier is supported; and if supported, sending information to the peer device in a data transmission phase according to the obtained quantity of bits that need to be actually carried by the subcarrier.

In a second possible implementation form of the second aspect, the subcarrier is a smallest unit carrier for transmitting information on a link connecting to the peer device.

In a third possible implementation form of the second aspect, the offset is received within an O-PMD or R-PMD message based on ITU-T G.993.2.

In a fourth possible implementation form of the second aspect, the receiving the offset sent by a peer device includes: receiving subcarrier group information and an offset of each group that are sent by the peer device, where the offset of each group indicates an offset of all subcarriers in each group.

According to a third aspect, an embodiment of the present invention provides a network transmit device configured and intended to perform any of the methods according to the first aspect or its implementation forms.

According to a fourth aspect, an embodiment of the present invention provides a network receive device configured and intended to perform any of the methods according to the second aspect or its implementation forms.

The solutions described in the embodiments can not only be compatible with an existing mode in which only four bits are used to represent a quantity of bits carried by a subcarrier, but also implement a mode of carrying more than 15 bits by the subcarrier. Therefore, a subcarrier carrying capability supported by a device can be used to a maximum extent. This helps a sender to send data quickly or a receiver to read information quickly, and can greatly improve a system processing rate.

### BRIEF DESCRIPTION OF DRAWINGS

FIG. 1 is a schematic diagram of connecting a CPE and a CO in a DSL network;
FIG. 2 is a schematic flowchart of a method according to an embodiment of the present invention;

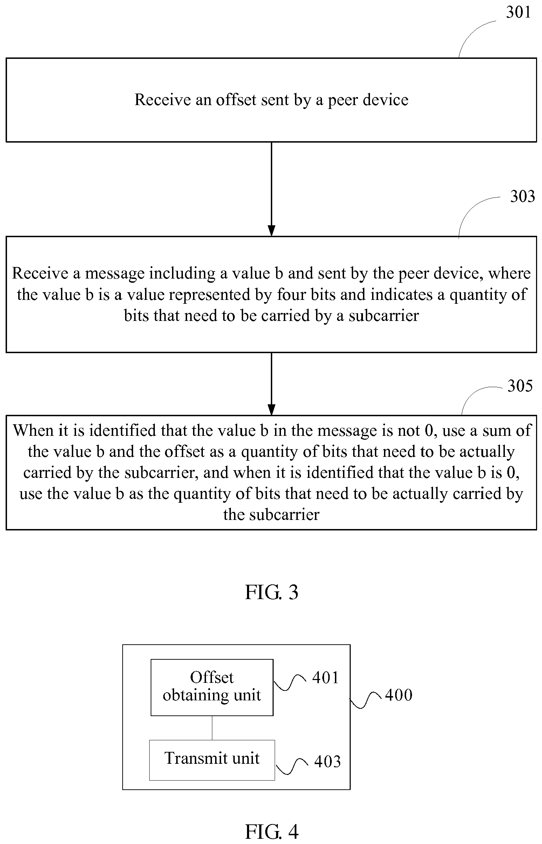

FIG. 3 is a schematic flowchart of a method according to another embodiment of the present invention;
FIG. 4 is a schematic structural diagram of an apparatus according to an embodiment of the present invention;
FIG. 5 is a schematic structural diagram of an apparatus according to another embodiment of the present invention;
FIG. 6 is a schematic structural diagram of a system according to an embodiment of the present invention; and
FIG. 7 is a schematic structural diagram of a general-purpose network component according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

Information is transferred by using a subcarrier between a CO and a CPE. Currently, four bits are used to represent a quantity of bits carried by each subcarrier, and may be used to represent any value between 0 and 15. An offset (offset) is introduced in the present invention and is combined with the four bits to represent a value greater than 15. In this way, *b̂* =b+offset, where *b̂* represents a quantity of bits that need to be actually carried by the subcarrier, b represents a value represented by four bits, and offset is the offset. However, when b=0, there is no offset. Table 1 shows a correspondence between b and *b̂* when the offset=2.

**Table 1 Correspondence between b and b̂ when the offset=2**

| **b** | **Offset (offset)** | *b̂* |
|---|---|---|
| 0 | 2 | 0 |
| 1 | 2 | 3 |
| 2 | 2 | 4 |
| ⋮ | ⋮ | ⋮ |
| 15 | 2 | 17 |

In a case of offset=k, the correspondence between b and *b̂* is shown in Table 2. When the offset is 0, it indicates that there is no offset, and a maximum quantity of bits that the subcarrier is capable of carrying is 15; when the offset is 1, the maximum quantity of bits that the subcarrier is capable of carrying is 16. Likewise, when the offset is k, the maximum quantity of bits that the subcarrier is capable of carrying is k+15.

**Table 2 Values of b corresponding to different offsets**

| **Value range of b** | **Offset (offset)** | **Value range of** *b̂* |
|---|---|---|
| [0, 1, 2, ..., 15] | 0 | [0, 1, 2, ..., 15] |
| [0, 1, 2, ..., 15] | 1 | [0, 2, 3, ..., 16] |
| [0, 1, 2, ..., 15] | 2 | [0, 3, 4, ..., 17] |
| [0, 1, 2, ..., 15] | 3 | [0, 4, 5, ..., 18] |
| ⋮ | ⋮ | ⋮ |
| [0, 1, 2, ..., 15] | k | [0, k+1, k+2, ..., k+15] |

The value b (represented by four bits) is used to configure a message for a table b according to the ITU-T G.993.2 standard; then, the message is sent to a peer device, and the offset is also sent to the peer device by using another message, so that the peer device can obtain, based on the offset, a quantity of bits that can be carried by each subcarrier, and normally process received message. Generally, a receive device in a direction (uplink or downlink) notifies a transmit device of a subcarrier processing capability of the receive device in advance. This specifically includes: For an offset of an uplink subcarrier of a CPE, a CO may send, to the CPE, the offset along with a message for configuring an uplink table b, or send the offset either before or after a message for configuring an uplink table b; this is acceptable as long as determining the value *b̂* by the CPE is not affected. For an offset of a downlink subcarrier of the CO, the CPE may send, to the CO, the offset along with a message for configuring a downlink table b, or send the offset either before or after a message for configuring a downlink table b; this is acceptable as long as determining the value *b̂* by the CO is not affected.

It should be noted that a message for configuring a table b and an offset may be transferred in a link initialization phase. Though a maximum quantity of bits that a subcarrier is capable of carrying between devices at both ends has not been determined in the link initialization phase, in the initialization phase, it is agreed that each subcarrier carries only two bits of information, which definitely does not exceed a carrying capability of the subcarrier between the devices at both ends, and therefore, the information can be sent and received normally. More specifically, for the uplink table b, the offset may be set in an O-PMD message in the initialization phase and sent to the CPE; for the downlink table b, the offset may be set in an R-PMD message in the initialization phase and sent to the CO.

Additionally, after separately obtaining the table b and the offset, the devices at both ends enter a data transmission phase (namely, a showtime phase) according to a negotiated subcarrier carrying capability. In the data transmission phase, if the table b needs to be modified, a new offset value may also be sent in the foregoing manner when a new table b is sent; afterward, the devices at both ends transmit data according to a subcarrier carrying capability that is determined according to the new table b and the new offset.

An embodiment of the present invention provides a subcarrier information indicating method, including:
Step 201: Select an offset according to a maximum quantity of bits that a subcarrier is capable of carrying, where a difference between the maximum quantity of bits that the subcarrier is capable of carrying and the selected offset is greater than 0 and less than or equal to 15.

For example, if the maximum quantity of bits that the subcarrier is capable of carrying is 17, any one of values 2 to 16 may be selected as the offset.

Step 203: Obtain a difference by subtracting the offset from a quantity of bits that need to be actually carried by the subcarrier, and if the difference is not less than 0, send the difference to a peer device as a value b.

Step 205: Send the offset to the peer device, and instruct the peer device to obtain, according to the value b and the offset, the quantity of bits that need to be actually carried by the subcarrier.

The subcarrier is a smallest unit carrier for transmitting information on a link connecting to the peer device.

Further, the selecting an offset includes: selecting, within a value range less than or equal to the maximum quantity of bits that the subcarrier is capable of carrying, a value as the offset, or obtaining the offset according to a preset mapping table between a maximum quantity of bits that each subcarrier is capable of carrying and an offset, so that the difference between the maximum quantity of bits that the subcarrier is capable of carrying and the selected offset is greater than 0 and less than or equal to 15.

The offset may be 0 or another natural number.

Still further, after step 205, the method further includes: if the peer device also supports the obtained quantity of bits that need to be actually carried by the subcarrier, sending information in a data transmission phase according to the obtained quantity of bits that need to be actually carried by the subcarrier.

Further, according to a requirement of the ITU-T G.993.2, four bits are used to represent the value b in a message field used for configuration of a table b.

Still further, the offset may be set in an O-PMD or R-PMD message and sent to the peer device.

The method may be performed in a link initialization phase and/or in the data transmission phase.

According to the method, a larger quantity of bits can be sent by a subcarrier on a premise that a message format for exchanging table b information between a sender and a receiver keeps unchanged. This helps a sender to send data quickly and a receiver to read a message quickly, and can greatly improve a system processing rate.

Further, grouping (grouping) all subcarriers in a transmission direction (an uplink direction or downlink direction) according to the maximum quantity of bits that the subcarrier is capable of carrying, so as to ensure that subcarriers in each group (group) can use a same offset. In this case, the offset of all the subcarriers in each group is the same, and referred to as a group offset.

Further, the sending the offset to the peer device includes: sending group information obtained by grouping all the subcarriers and the offset of each group to the peer device, to ensure that maximum quantities of bits that the subcarriers in each group are capable of carrying are the same.

The group information may be represented by using a start subcarrier and an end subcarrier of each group.

Specifically, one offset may be set for each group in a configuration message. Two parameters need to be used: one parameter is an offset; the other parameter indicates a group corresponding to the offset and specifically, may be identified by using the start subcarrier and the end subcarrier of each group. For multiple groups, the start subcarriers and the end subcarriers of groups can be arranged in order or according to another rule, and corresponding offsets of the groups are also arranged according to a corresponding rule. A string representing the two parameters is variable in length.

In this way, according to this embodiment, when receiving a message configured with the two parameters, a peer end can obtain a quantity of bits that can be carried by subcarriers in each group and can normally process received information.

The following uses downlink as an example for description. Assume that all downlink subcarriers are divided into three groups: Group1, Group2, and Group3. A local device obtains through calculation that a maximum quantity of bits that all subcarriers in Group₁ are capable of carrying is 18, and then offseti=3; a maximum quantity of bits that all subcarriers in Group₂ are capable of carrying is 17, and then offset₂=2; a maximum quantity of bits that all subcarriers in Group₃ are capable of carrying is 15, and then offset₃=0.

A downstream max bit tone groups (Downstream Max Bit tone groups) field and a downstream max bit offset (Downstream Max Bit Offset) field are added to the R-PMD message, where in the downstream max bit tone groups field, a quantity of groups is represented by using one byte (8 bits), and the start and end subcarriers of each group are represented by using three bytes (24 bits). Configuration may be performed as follows:

| **Quantity of bytes** | **Content** |
|---|---|
| 1 | Group quantity |
| 3 | Bits 0-11: Start subcarrier of the downlink Group1 |
| | Bits 12-23: End subcarrier of the downlink Group1 |
| 3 | Bits 0-11: Start subcarrier of the downlink Group2 |
| | Bits 12-23: End subcarrier of the downlink Group2 |
| 3 | Bits 0-11: Start subcarrier of the downlink Group3 |
| | Bits 12-23: End subcarrier of the downlink Group3 |

Downstream max bit offset may be converted to binary values (separately represented by two bits) according to the offsets of the three groups, and then be arranged in descending order as [00 10 11], where 11 indicates a value of offset₁, 10 indicates a value of offset₂, and 00 indicates a value of offset₃.

The local device sends R-PMD added with the downstream max bit tone groups field and the downstream max bit offset field to the peer end. After receiving the R-PMD message, the peer end can determine an offset corresponding to the subcarriers in each group. Processing in the uplink direction is similar to the foregoing method, except that a setting and processing object in the foregoing method is changed to an uplink subcarrier. In the foregoing embodiment, the quantity of bytes used for representing the group quantity, the start and end subcarriers of each group, and the offset may be other values, and implementation of the present invention are not affected, as long as the foregoing parameters can be clearly represented, and can be normally identified by the sender and the receiver.

Different offsets may be set between groups, and an offset may be separately set for subcarriers with a different carrying capability according to a group. Therefore, offsets are set more flexibly. For example, according to a relationship in table 2, when an offset of a group of subcarriers is k, it may indicate that a quantity of bits that need to be actually carried by the subcarriers is in a range of [0, k+1, k+2, ..., k+15]; when an offset of a group of subcarriers is k-1, it may indicate that a quantity of bits that need to be actually carried by the subcarriers is in a range of [0, k+1, k+2, ..., k+14]. With reference to an exception scenario in step 203, if the difference obtained by subtracting the offset from the quantity of bits that need to be actually carried by the subcarrier is less than 0, the subcarrier may be assigned to another group and be set to another offset, so as to ensure that the difference obtained by subtracting the offset from the quantity of bits that need to be actually carried by the subcarrier is not less than 0, and processing may be continued in a manner of steps 203 and 205.

An embodiment of the present invention provides a subcarrier information processing method, where the method includes:
Step 301: Receive an offset sent by a peer device.
Step 303: Receive a message including a value b and sent by the peer device, where the value b is a value represented by four bits and indicates a quantity of bits that need to be carried by a subcarrier.
Step 305: When it is identified that the value b in the message is not 0, use a sum of the value b and the offset as a quantity of bits that need to be actually carried by the subcarrier, and when it is identified that the value b is 0, use the value b as the quantity of bits that need to be actually carried by the subcarrier.

The subcarrier is a smallest unit carrier for transmitting information on a link connecting to the peer device.

The offset may be 0 or another natural number.

Further, after step 305, the method further includes: determining whether the obtained quantity of bits that need to be actually carried by the subcarrier is supported; and if supported, sending information to the peer device in a data transmission phase according to the obtained quantity of bits that need to be actually carried by the subcarrier.

Further, the offset is sent by the peer device by using an O-PMD or R-PMD message. Still further, the receiving an offset sent by a peer device includes receiving subcarrier group information and an offset of each group that are sent by the peer device, where the offset of each group indicates an offset of all subcarriers in each group.

All the subcarriers in each group are determined by identifying a start subcarrier and an end subcarrier of each group in the group information.

The method may be performed in a link initialization phase and/or in the data transmission phase.

An embodiment of the present invention further provides a network transmit device 400, where the network transmit device includes an offset obtaining unit 401 and a transmit unit 403.

The offset obtaining unit 401 is configured to select an offset according to a maximum quantity of bits that a subcarrier is capable of carrying, where a difference between the maximum quantity of bits that the subcarrier is capable of carrying and the selected offset is greater than 0 and less than or equal to 15.

The transmit unit 403 is configured to obtain a difference by subtracting the offset from a quantity of bits that need to be actually carried by the subcarrier, and if the difference is not less than 0, send the difference to a peer device as a value b, send the offset to the peer device, and instruct the peer device to obtain, according to the value b and the offset, the quantity of bits that need to be actually carried by the subcarrier.

The subcarrier is a smallest unit carrier for transmitting information on a link between the network transmit device 400 and the peer device.

Further, the offset obtaining unit 401 selects, within a value range less than or equal to the maximum quantity of bits that the subcarrier is capable of carrying, a value as the offset, or obtains the offset according to a preset mapping table between a maximum quantity of bits that each subcarrier is capable of carrying and an offset. The offset may be 0 or another natural number.

Still further, the transmit unit 403 is further configured to use, according to a requirement of the ITU-T G.993.2, four bits to represent the value b in a message field used for configuration of a table b, and send the value b to the peer device.

Further, the offset obtaining unit 401 is configured to group all subcarriers in a transmission direction according to the maximum quantity of bits that the subcarrier is capable of carrying, so as to ensure that subcarriers in each group can use a same offset. In this case, the offset of all the subcarriers in each group is the same, and referred to as a group offset.

Further, the transmit unit 403 sends group information obtained by grouping all the subcarriers and the offset of each group to the peer device.

Still further, the network transmit device 400 is a CPE or a CO, and correspondingly, the transmit unit 403 is a transmitter of the CPE or the CO.

It should be further noted that specific actions of the offset obtaining unit 401 and the transmit unit 403 in the network transmit device 400 are the method in the foregoing method embodiments, and specific steps are not described again.

An embodiment of the present invention provides a network receive device 500, where the network receive device 500 includes a receive unit 501 and an offset processing unit 503. The receive unit 501 is configured to receive an offset sent by a peer device; and receive a table b configuration message sent by the peer device, where the value b is a value that is represented by four bits and that indicates a quantity of bits that need to be carried by a subcarrier.

The offset processing unit 503 is configured to, when it is identified that the value b in the message is not 0, use a sum of the value b and the offset as a quantity of bits that need to be actually carried by the subcarrier, and when it is identified that the value b is 0, use the value b as the quantity of bits that need to be actually carried by the subcarrier.

The subcarrier is a smallest unit carrier for transmitting information on a link between the network receive device 500 and the peer device.

The offset may be 0 or another natural number.

Further, the offset is sent by the peer device by using an O-PMD or R-PMD message.

Still further, the receive unit 501 is further configured to receive subcarrier group information and an offset of each group that are sent by the peer device, where the offset of each group indicates an offset of all subcarriers in each group.

Still further, the offset processing unit 503 is further configured to determine whether the obtained quantity of bits that need to be actually carried by the subcarrier is supported by the network receive device 500; and if supported, send information to the peer device in a data transmission phase according to the obtained quantity of bits that need to be actually carried by the subcarrier.

Still further, the offset processing unit 503 determines all the subcarriers in each group by identifying a start subcarrier and an end subcarrier of each group in the group information. The network receive device 500 is a CPE or a CO, and correspondingly, the receive unit 501 is a receiver of the CPE or the CO.

It should be further noted that specific actions of the receive unit and the offset processing unit in the network receive device 500 are the method in the foregoing method embodiments, and specific steps are not described again.

An embodiment of the present invention also provides a network system 600, including a network-side device 601 and a user-side device 603.

The network-side device 601 is the network transmit device in the foregoing embodiments, and correspondingly, the user-side device 603 may be the network receive device in the foregoing embodiments. Alternatively, the network-side device 601 is the network receive device in the foregoing embodiments, and correspondingly, the user-side device 603 may be the network transmit device in the foregoing embodiments.

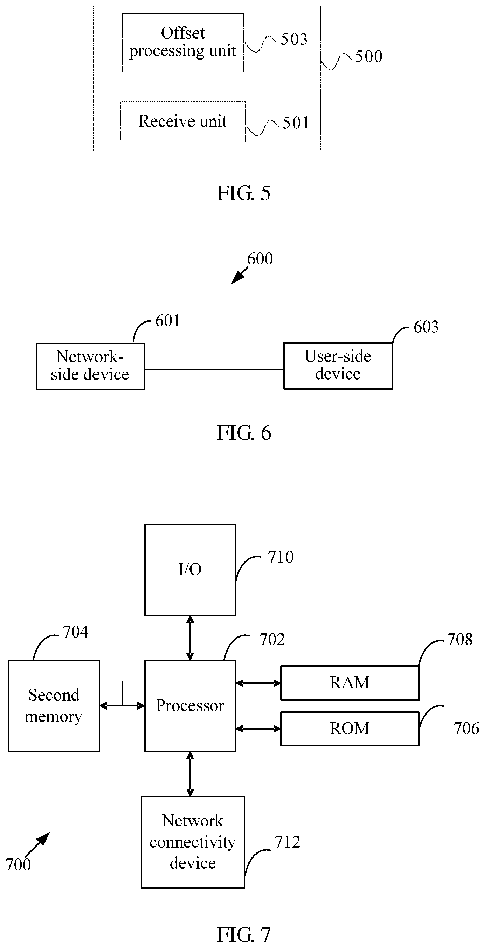

A person of ordinary skill in the art may understand that all or some steps of the method according to the embodiments may be implemented by a program instructing relevant hardware. The program may be stored in a computer readable storage medium. When the program runs, the steps of the method according to the embodiments are performed. The storage medium may be any medium capable of storing program code, such as a ROM, a RAM, a magnetic disk, or an optical disc. Specifically, the network processing process described above may be implemented on common components, such as computers or network components having sufficient processing capabilities, memory resources, and network throughput capabilities. FIG. 7 schematically illustrates an electrical general-purpose network component 700 that is applicable for implementing one or more embodiments of the components disclosed in the specification. The network component 700 includes a processor 702 (which may be referred to as a central processing unit or CPU). The processor 702 communicates with a storage device, including a second memory 704, a read only memory (ROM) 706, a random access memory (RAM) 708, an input/output (I/O) device 710, and a network connectivity device 712. The processor 702 may be implemented as one or more CPU chips, or may be implemented as a part of one or more application-specific integrated circuits.

The second memory 704 is typically composed of one or more disk drives or disc drives and is configured to perform nonvolatile storage of data and, if the RAM 708 is insufficient to accommodate all of the work data, is used as an overflow data storage device. The second memory 704 may be configured to store programs that are loaded into the RAM 708 when being selected for execution, the ROM 706 is configured to store an instruction and/or data read during program execution, the ROM 706 is a nonvolatile storage device and typically has a relatively small memory capacity compared with a relatively large memory capacity of the second memory 704. The RAM 708 is configured to store volatile data and may store an instruction. Access to the ROM 706 and RAM 708 is generally faster than access to the second memory 704.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A subcarrier information indicating method, wherein the method comprises:
selecting an offset according to a maximum quantity of bits that a subcarrier is capable of carrying, wherein a difference between the maximum quantity of bits that the subcarrier is capable of carrying and the selected offset is greater than o and less than or equal to 15 (step 201);
obtaining a difference obtained by subtracting the offset from a quantity of bits that need to be actually carried by the subcarrier, and if the difference is not less than o, sending in a message the difference to a peer device as a value b being represented by four bits (step 203); and
sending the offset to the peer device, and instructing the peer device to obtain, according to the value b and the offset, the quantity of bits that need to be actually carried by the subcarrier (step 205).

2. The method according to claim 1, wherein the selecting an offset comprises: selecting, within a value range less than or equal to the maximum quantity of bits that the subcarrier is capable of carrying, a value as the offset, or obtaining the offset according to a preset mapping table between a maximum quantity of bits that each subcarrier is capable of carrying and an offset.

3. The method according to claim 1 or 2, wherein the subcarrier is a smallest unit carrier for transmitting information on a link connecting to the peer device.

4. The method according to any one of claims 1 to 3, wherein the sending the offset to the peer device comprises: grouping all subcarriers in a transmission direction according to the maximum quantity of bits that the subcarrier is capable of carrying, so as to ensure that subcarriers in each group can use a same offset; and sending group information obtained by grouping all the subcarriers and the offset of each group to the peer device.

5. A subcarrier information processing method, wherein the method comprises:
receiving an offset sent by a peer device (step 301);
receiving a message comprising a value b and sent by the peer device, wherein the value b is a value represented by four bits and indicates a quantity of bits that need to be carried by a subcarrier (step 303); and
when it is identified that the value b in the message is not o, using a sum of the value b and the offset as a quantity of bits that need to be actually carried by the subcarrier, and when it is identified that the value b is o, using the value b as the quantity of bits that need to be actually carried by the subcarrier (step 305).

6. The method according to claim 5, wherein the method further comprises: determining whether the obtained quantity of bits that need to be actually carried by the subcarrier is supported; and if supported, sending information to the peer device in a data transmission phase according to the obtained quantity of bits that need to be actually carried by the subcarrier.

7. The method according to claim 5 or 6, wherein the subcarrier is a smallest unit carrier for transmitting information on a link connecting to the peer device.

8. The method according to claim 5, 6, or 7, wherein the offset is received within an O-PMD or R-PMD message based on ITU-T G.993.2.

9. The method according to any one of claims 5 to 8, wherein the receiving the offset sent by the peer device comprises: receiving subcarrier group information and an offset of each group that are sent by the peer device, wherein the offset of each group indicates an offset of all subcarriers in each group.

10. A network transmit device (400) configured and intended to perform any of the methods according to claims 1 - 4.

11. A network receive device (500) configured and intended to perform any of the methods according to claims 5 - 9.

## Patentansprüche

1. Verfahren zum Anzeigen von Zwischenträgerinformationen, wobei das Verfahren umfasst:
Auswählen eines Abstands einer maximalen Anzahl an Bits entsprechend, die ein Zwischenträger zu tragen in der Lage ist, wobei eine Differenz zwischen der maximalen Anzahl an Bits, die der Zwischenträger zu tragen in der Lage ist, und dem gewählten Abstand größer als 0 und geringer als oder gleich 15 ist (Schritt 201);
Erhalten einer Differenz, die durch Abziehen des Abstands von einer Anzahl Bits erhalten wird, die durch den Zwischenträger tatsächlich zu tragen sind, und wenn die Differenz nicht weniger als 0 ist, Senden der Differenz in einer Meldung an eine Peer-Vorrichtung als Wert b, der durch vier Bits dargestellt wird (Schritt 203); und
Senden des Abstands an die Peer-Vorrichtung und Anweisen der Peer-Vorrichtung, dem Wert b und dem Abstand entsprechend die Anzahl an Bits zu erhalten, die tatsächlich durch den Zwischenträger zu tragen sind (Schritt 205).

2. Verfahren nach Anspruch 1, wobei das Auswählen eines Abstands umfasst: Auswählen innerhalb eines Wertebereichs von weniger als oder gleich der maximalen Anzahl an Bits, die der Zwischenträger tragen kann, eines Werts als Abstand, oder Erhalten des Abstands nach einer vorgegebenen Mapping-Tabelle zwischen einer maximalen Anzahl an Bits, die jeder Zwischenträger zu tragen in der Lage ist, und einem Abstand.

3. Verfahren nach Anspruch 1 oder 2, wobei der Zwischenträger ein Träger einer kleinsten Einheit zum Übermitteln von Informationen über einen Link ist, der eine Verbindung mit der Peer-Vorrichtung herstellt.

4. Verfahren nach einem der Ansprüche 1 bis 3, wobei das Senden des Abstands an die Peer-Vorrichtung umfasst: Gruppieren aller Zwischenträger in einer Übertragungsrichtung nach der maximalen Anzahl an Bits, die der Zwischenträger zu tragen in der Lage ist, um sicherzustellen, dass die Zwischenträger in jeder Gruppe einen selben Abstand nutzen können, und Senden von durch Gruppieren aller Zwischenträger erhaltenen Gruppeninformationen und des Abstands jeder Gruppe an die Peer-Vorrichtung.

5. Verfahren zum Verarbeiten von Zwischenträgerinformationen, wobei das Verfahren umfasst:
Empfangen eines Abstands, der durch eine Peer-Vorrichtung gesendet wird (Schritt 301);
Empfangen einer Meldung, die einen Wert b umfasst und durch die Peer-Vorrichtung gesendet wird,
wobei der Wert b ein Wert ist, der durch vier Bits dargestellt wird und eine Anzahl an Bits darstellt, die durch einen Zwischenträger zu tragen sind (Schritt 303); und
wenn festgestellt wird, dass der Wert b in der Meldung nicht 0 ist, Verwenden einer Summe des Werts b und des Abstands als Anzahl an Bits, die tatsächlich durch den Zwischenträger zu tragen sind, und wenn festgestellt wird, dass der Wert b 0 ist, Verwenden des Werts b als Anzahl an Bits, die tatsächlich durch den Zwischenträger zu tragen sind (Schritt 305).

6. Verfahren nach Anspruch 5, wobei das Verfahren ferner umfasst: Bestimmen, ob die erhaltene Anzahl an Bits, die tatsächlich durch den Zwischenträger zu tragen sind, unterstützt wird; und wenn sie unterstützt wird, Senden von Informationen an die Peer-Vorrichtung in einer Datenübertragungsphase der erhaltenen Anzahl an Bits entsprechend, die tatsächlich durch den Zwischenträger zu tragen sind.

7. Verfahren nach Anspruch 5 oder 6, wobei der Zwischenträger ein Träger einer kleinsten Einheit zum Übermitteln von Informationen über einen Link ist, der eine Verbindung mit der Peer-Vorrichtung herstellt.

8. Verfahren nach Anspruch 5, 6 oder 7, wobei der Abstand innerhalb einer O-PMD- oder R-PMD-Meldung auf Grundlage von ITU-T G.993.2 empfangen wird.

9. Verfahren nach einem der Ansprüche 5 bis 8, wobei das Empfangen des Abstands, der durch die Peer-Vorrichtung gesendet wird, umfasst: Empfangen von Zwischenträgergruppeninformationen und eines Abstands jeder Gruppe, die durch die Peer-Vorrichtung gesendet werden, wobei der Abstand jeder Gruppe einen Abstand aller Zwischenträger jeder Gruppe darstellt.

10. Netzwerkübertragungsvorrichtung (400), konfiguriert und vorgesehen, um eines der Verfahren nach Ansprüchen 1 bis 4 auszuführen.

11. Netzwerkempfangsvorrichtung (500), konfiguriert und vorgesehen, um eines der Verfahren nach Ansprüchen 5 bis 9 auszuführen.

## Revendications

1. Procédé d'indication d'informations de sous-porteuses, le procédé consistant à :
sélectionner un décalage en fonction d'une quantité de bits maximum qu'une sous-porteuse est capable d'acheminer, une différence entre la quantité de bits maximum que la sous-porteuse est capable d'acheminer et le décalage sélectionné étant supérieure à 0 ou inférieure ou égale à 15 (étape 201) ;
obtenir une différence obtenue en soustrayant le décalage d'une quantité de bits qui doivent réellement être acheminés par la sous-porteuse, et si la différence n'est pas inférieure à 0, envoyer dans un message la différence à un dispositif homologue en tant que valeur b qui est représentée par quatre bits (étape 203) ; et
envoyer le décalage au dispositif homologue, et donner instruction au dispositif homologue d'obtenir, en fonction de la valeur b et du décalage, la quantité de bits qui doivent réellement être acheminés par la sous-porteuse (étape 205).

2. Procédé selon la revendication 1, dans lequel la sélection d'un décalage consiste à : sélectionner, dans une plage de valeurs inférieures ou égales à la quantité de bits maximum que la sous-porteuse est capable d'acheminer, une valeur en tant que décalage, ou obtenir le décalage en fonction d'une table de mappage prédéfinie entre une quantité de bits maximum que chaque sous-porteuse est capable d'acheminer et un décalage.

3. Procédé selon la revendication 1 ou 2, dans lequel la sous-porteuse est une porteuse d'une unité la plus petite permettant de transmettre des informations sur une liaison qui se connecte au dispositif homologue.

4. Procédé selon l'une quelconque des revendications 1 à 3, dans lequel l'envoi du décalage au dispositif homologue consiste à : grouper toutes les sous-porteuses dans une direction de transmission en fonction de la quantité de bits maximum que la sous-porteuse est capable d'acheminer, de façon à garantir que des sous-porteuses dans chaque groupe peuvent utiliser un même décalage ; et envoyer des informations de groupe obtenues en groupant toutes les sous-porteuses et le décalage de chaque groupe au dispositif homologue.

5. Procédé de traitement d'informations de sous-porteuses, dans lequel le procédé consiste à :
recevoir un décalage envoyé par un dispositif homologue (étape 301) ;
recevoir un message comprenant une valeur b et envoyé par le dispositif homologue, la valeur b étant une valeur représentée par quatre bits et indiquant une quantité de bits qui doivent être acheminés par une sous-porteuse (étape 303) ; et
lorsqu'on identifie que la valeur b dans le message n'est pas 0, utiliser une somme de la valeur b et du décalage comme une quantité de bits qui doivent réellement être acheminés par la sous-porteuse, et lorsqu'on identifie que la valeur b est 0, utiliser la valeur b comme la quantité de bits qui doivent réellement être acheminés par la sous-porteuse (étape 305).

6. Procédé selon la revendication 5, dans lequel le procédé consiste en outre à :
déterminer si la quantité de bits obtenus qui doivent réellement être acheminés par la sous-porteuse est prise en charge ou non; et si elle est prise en charge, envoyer les informations au dispositif homologue dans une phase de transmission de données en fonction de la quantité de bits obtenus qui doivent réellement être acheminés par la sous-porteuse.

7. Procédé selon la revendication 5 ou 6, dans lequel la sous-porteuse est une porteuse de la plus petite unité permettant de transmettre des informations sur une liaison qui se connecte au dispositif homologue.

8. Procédé selon la revendication 5, 6 ou 7, dans lequel le décalage est reçu dans un message O-PMD ou R-PMD basé sur ITU-T G.993.2.

9. Procédé selon l'une quelconque des revendications 5 à 8, dans lequel la réception du décalage envoyé par le dispositif homologue consiste à : recevoir des informations de groupe de sous-porteuses et un décalage de chaque groupe qui sont envoyés par le dispositif homologue, le décalage de chaque groupe indiquant un décalage de toutes les sous-porteuses dans chaque groupe.

10. Dispositif de transmission de réseau (400) conçu et prévu pour mettre en oeuvre l'un quelconque des procédés selon les revendications 1 à 4.

11. Dispositif de réception de réseau (500) conçu et prévu pour mettre en oeuvre l'un quelconque des procédés selon les revendications 5 à 9.
